# EUROPEAN PATENT SPECIFICATION

(11) **EP 4 580 986 B1**
(45) Date of publication and mention of the grant of the patent: **15.04.2026**
(21) Application number: 24786857.3
(22) Date of filing: 14.10.2024
(51) Int. Cl.: C01B 3/506, C01B 3/32, B01D 53/00, F25J 3/06, C01B 3/22

(54) **HYDROGEN GAS PRODUCTION SYSTEM AND METHOD**
SYSTEM UND VERFAHREN ZUR HERSTELLUNG VON WASSERSTOFFGAS
SYSTÈME ET PROCÉDÉ DE PRODUCTION D'HYDROGÈNE GAZEUX

(30) Priority: 13.10.2023 NL 2036030
(43) Date of publication of application: 09.07.2025
(73) Proprietor: Dens B.V., 5708 JZ Helmond (NL)
(72) Inventor: DJOZIN-KEMADJOU, Luc Marinus, 5708 JZ Helmond (NL); SWINKELS, Martinus Arnoldus Petrus Maria, 5708 JZ Helmond (NL); AERTS, Max Joannes Robertus, 5708 JZ Helmond (NL); DE LAAT, Yoshi Johannes Henricus Jacobus, 5708 JZ Helmond (NL)
(74) Representative: Arnold & Siedsma
(86) International application number: PCT/EP2024/078857
(87) International publication number: WO 2025/078685

(56) References cited:
- WO-A1-2022/163385
- WO-A1-2023/021995
- CN-A- 115 594 148
- GB-A- 2 446 062
- GB-A- 2 489 197
- GB-A- 2 490 476
- US-A1- 2022 332 574
- US-A1- 2023 025 321
- US-A1- 2024 076 183
- US-B1- 11 635 255
- INDRANIL DUTTA: "Formic Acid to Power towards Low-Carbon Economy", vol. 12, no. 15, 23 February 2022 (2022-02-23), DE, XP093159044, ISSN: 1614-6832, Retrieved from the Internet <URL:https://onlinelibrary.wiley.com/doi/full-xml/10.1002/aenm.202103799> [retrieved on 20240503], DOI: 10.1002/aenm.202103799

## Description

The present invention relates to a hydrogen gas production system configured to produce hydrogen gas from a fuel reformable into at least H₂ and CO₂ and to a method of producing hydrogen gas from a fuel reformable into at least H₂ and CO₂.

Hydrogen gas can be produced by reforming a suitable fuel into at least H₂ and CO₂. The purity of the produced hydrogen gas depends on the desired use. The CO₂ resulting from reforming the fuel is usually considered a wasteful by-product but may in fact form a useful product in addition to the H₂. Further, converting the fuel to hydrogen gas is an energy-intensive process.

Publication WO 2022/163385 A1 presents a method by which hydrogen can be continuously produced through a dehydrogenation reaction of a formic acid solution and a system therefor. This method involves a reaction step for, while supplying formic acid, catalytically degrading the formic acid into carbon dioxide and hydrogen to thereby continuously produce hydrogen, and further involves an extraction step for extracting formic acid from the formic acid solution serving as the starting material with the use of carbon dioxide obtained in the reaction step, and then supplying the formic acid to the reaction step.

Indranil Dutta et al. in "Formic Acid to Power towards Low-Carbon Economy", Advanced Energy Materials, 2022, vol. 12, present a perspective on recent advances in catalyst development for selective dehydrogenation of formic acid and high-pressure H₂ production.

Publication CN 115594148 A presents a reactor system for producing hydrogen based on dehydrogenation of formic acid and a startup method therefor.

Publication US 2022/332574 A2 presents a flow reactor system for providing on-demand H₂ evolution at pressure from a liquid organic hydrogen carrier. This system includes a reactor that includes a reaction vessel having an inlet and outlet. The system further includes a source of preheated liquid organic hydrogen carrier in fluid communication with the reactor and a purification system in fluid communication with the outlet that provides purified molecular hydrogen gas for on-demand applications.

Publication WO 2023/0321995 A1 presents a pumpless high-pressure hydrogen supply system and a method for said system. This system obtains a mixed gas of hydrogen and carbon dioxide by dehydrogenation of formic acid using a complex catalyst, separates the hydrogen therefrom, and supplies the hydrogen at pressure of 5 MPa or more. By obtaining this mixed gas at a pressure of 5 MPa or more by dehydrogenation and colling this mixed gas by a separator while maintaining this pressure at 0.4 MPa or more, gas components other than hydrogen are phase separated as liquids or solids and removed.

It is an object of the present invention to provide a method and system for producing hydrogen gas from a fuel reformable into at least H₂ and CO₂ which reduces disadvantages of existing technologies.

The present invention provides a method of producing hydrogen gas from a fuel reformable into at least H₂ and CO₂. The method comprises steps of:
(a) providing the fuel in a reactor;
(b) reforming the fuel in the reactor into at least H₂ and CO₂ to thereby provide a supercritical fluid or gas mixture comprising H₂ and CO₂;
(c) cooling the supercritical fluid or gas mixture in a heat exchanger assembly to induce phase separation resulting in a gas phase comprising H₂ and a liquid phase comprising CO₂ wherein the supercritical fluid or gas mixture is initially cooled in a heat exchanger A of the heat exchanger assembly and further cooled in a heat exchanger B of the heat exchanger assembly;
(d) separating the liquid phase from the gas phase;
(e) guiding the separated liquid phase obtained in step (d) as coolant into the heat exchanger assembly to cool the supercritical fluid or gas mixture in step (c), wherein the coolant is guided through the heat exchanger B and heat exchanger A in this order; and
(f) between the guiding of the separated liquid phase through the heat exchanger B and the heat exchanger A in step (e), expanding the coolant resulting in further cooling thereof and using the expanded coolant to cool the supercritical fluid or gas mixture in the heat exchanger A in step (c).

The fuel in step (a) is selected to be reformable into at least H₂ and CO₂. Reaction conditions in step (b) are selected such that the reforming reaction of the fuel results in the supercritical fluid or in the gas mixture, which comprises H₂ and CO₂ as products of the reforming reaction. More generally, the method may involve the production of a reaction product composition comprising H₂ and CO₂ in step (b), in particular in the form of a supercritical fluid or a gas mixture, which reaction product composition is then further processed in the subsequent steps of the method.

As the supercritical fluid or gas mixture is cooled in step (c), phase separation is induced resulting in a gas (or vapor) phase and a liquid phase. The gas or vapor phase comprises H₂ and the liquid phase comprises CO₂. The gas phase comprising H₂ obtained in step (c) - or more particularly after the separating of step (d) - may be enriched in H₂ compared to the supercritical fluid or gas mixture obtained in step (b). The liquid phase comprising CO₂ obtained in step (c) - or more particularly after the separating of step (d) - may be enriched in CO₂ compared to the supercritical fluid or gas mixture obtained in step (b). The cooling in step (c) preferably is isobaric cooling.

The supercritical fluid or gas mixture obtained in step (b) may comprise H₂ and CO₂ in a molar ratio of from 1:1 to 4:1. This ratio primarily depends on the fuel being used. For example, when formic acid is used as the fuel, the molar ratio H₂ : CO₂ is 1 : 1. For methanol, the molar ratio of H₂ : CO₂ is 3 : 1. When using methane in a reforming reaction with water, the molar ratio of H₂ : CO₂ is 4 : 1 (the net reaction being CH₄ + 2 H₂O → CO₂ + 4 H₂).

Preferably, the fuel is or comprises an organic hydrogen carrier, more preferably a liquid organic hydrogen carrier. An organic hydrogen carrier may be defined as a substance comprising carbon, oxygen and hydrogen atoms (i.e. at least one atom of each of carbon, oxygen and hydrogen). A preferred molar ratio of these atoms is C : O : H = 1 : 2 : 4. The fuel may consist of a mixture of substances at least comprising such an organic hydrogen carrier or a combination of organic hydrogen carriers. A liquid organic hydrogen carrier (LOHC) is preferred as this can be readily pumped into the reactor and pressurized. The reaction products H₂ and CO₂ are generally more volatile so can be removed from the reactor while the fuel and any reaction by-products may remain inside the reaction. In this context, 'liquid' refers to the state of the LOHC at standard temperature and pressure. Examples of LOHC include methanol, formic acid and mixtures thereof. Formic acid is preferred.

Step (b) may be performed in the presence of a catalyst. The reforming reaction may then involve catalytically reforming the fuel, even without any other reactants present.

At least 80 mol%, preferably 90 mol%, more preferably 95 mol%, of the supercritical fluid or gas mixture obtained in step (b) may consist of H₂ and CO₂. Reaction conditions and fuel in step (b) may be selected to obtain such levels of purity.

Step (b) may be performed at a pressure of at least 7.4 MPa, preferably at least 10 MPa, more preferably at least 15 MPa, most preferably at least 20 MPa. When the reaction pressure is 7.4 MPa or more, the critical point of pure CO₂ is surpassed.

Additionally or alternatively, step (b) may be performed at a pressure of up to 200 MPa, preferably up to 100 MPa, more preferably up to 50 MPa, even more preferably up to 30 MPa.

Additionally or alternatively, step (b) may be performed at a temperature of from 40 °C to 150 °C, preferably from 90 °C to 140 °C, more preferably from 110 °C to 130 °C, most preferably (120 ± 5) °C. These temperatures form a surprising balance between reaction efficiency, reaching the supercritical state and allowing a cooling step to be made for advantageous separation of the gas and liquid phases. The temperatures have been found to be especially suitable for formic acid or other LOHCs.

The cooling of step (c) may involve cooling to a temperature of 15°C or lower, preferably 0 °C or lower, more preferably -15 °C or lower, even more preferably (-25 ± 5) °C. Cooling to a lower temperature may enhance phase separation and moreover increase purity H₂ in the gas phase.

Corollary, more CO₂ will be found in the liquid phase. In particular, the gas phase comprising H₂ may have at least 80 mol%, preferably at least 85 mol%, more preferably at least 90 mol%, of H₂. The liquid phase comprising CO₂ may have at least 80 mol%, preferably at least 90 mol%, of CO₂ and/or at most 20 mol%, at most 10 mol%, of H₂.

The method comprises the step (f) of expanding the separated liquid phase, resulting in further cooling thereof, and using the expanded separated liquid phase to cool the supercritical fluid or gas mixture in step (c). The expanded separated liquid phase may now be in an ordinary liquid or gas phase (at least no longer in a supercritical fluid state) or may be a liquid condensed from the gas mixture. The expanding of step (f) preferably is adiabatically expanding. Latent heat of the separated liquid phase may then be employed.

Step (c) may be performed in the heat exchanger assembly arranged downstream from the reactor. Step (d) may be performed in a separator arranged downstream from the heat exchanger assembly.

Preferably, at least steps (b) and (c) are performed under isobaric conditions. In this context, the term isobaric refers to a single pressure being established on the reactor, which then freely communicates with the heat exchanger assembly into the separator. In other words, these components may be in open fluid communication. Though some pressure losses may arise, it is preferred that no pressure regulators or valves are provided between reactor, heat exchanger assembly and separator. More preferably, also step (d) and/or (e) are performed under the same isobaric conditions.

Step (a) may comprise pressurizing the fuel from a fuel storage tank into the reactor to thereby establish a pressure in the reactor for reforming the fuel in step (b). The fuel storage tank may a vessel at ambient conditions, or may be partially pressurized to a pressure below that for the reforming reaction in step (b). The pressurizing of the fuel into the reactor may set the isobaric conditions of subsequent steps described above.

The reactor contents may be heated in step (b) using heat obtained by combusting part (i.e. a combustible part) of the separated liquid phase, in particular any residual H₂ in the liquid phase (which may be dissolved in the liquified CO₂), preferably after said liquid phase has been guided through the heat exchanger assembly. Additionally or alternatively, the reactor contents may be heated in step (b) using heat obtained by combusting part of the separated gas phase obtained in step (d). In other words, after step (d) and/or (e), H₂ in either or both of the separated liquid and gas phases can be combusted to provide heat for the reforming reaction in step (a). Apart from any residual H₂, if residual fuel and/or other combustible reaction products are present, these may also be combusted to provide heat as described.

The method may further comprise a step (g) of guiding the separated gas phase obtained in step (d) into a hydrogen gas tank. The hydrogen gas tank may be couplable or coupled to a hydrogen gas consuming device, such as an internal combustion engine. Such tank may close off the system at a downstream end and enable pressurizing of the system against a pump pressurizing the fuel into the reactor. Alternatively or additionally, the pump may act against outlets of the separator or valves thereof to establish the pressure inside the system, or at least inside the reactor, the heat exchanger assembly and the separator vessel. In accordance with the technology disclosed here, even a single pump (or compressor) would suffice in the method and system for pressurizing the whole process/system for the production of hydrogen gas. This enables an efficient and economic design.

The method may then further comprise fuelling the hydrogen gas consuming device, such as an internal combustion engine or a fuel cell, with hydrogen gas from the hydrogen gas tank. Alternatively, hydrogen gas may be provided directly from the separator. In any case, the method may thus form a method for providing hydrogen gas fuel.

Part of the separated gas phase may be guided from the hydrogen gas tank to a combustor to heat the reactor contents.

The method may advantageously be performed in a continuous way. At least steps (a) - (e) may be part of a continuous process. Further optional steps described herein may also be part of such continuous process, in particular steps (f) and/or (g). Additionally or alternatively, combusting H₂ from the liquid and/or gas phases may also be performed as part of such a continuous process. The whole method may thus form energy-efficient process which (at least in part) may even be self-sustaining.

The present invention also provides a hydrogen gas production system configured to produce hydrogen gas from a fuel reformable into at least H₂ and CO₂. The system comprises:
a reactor configured to receive the fuel and to reform the fuel into a supercritical fluid or gas mixture comprising H₂ and CO₂;
a heat exchanger assembly arranged in fluid communication with and downstream from the reactor and configured to receive the supercritical fluid or gas mixture and to cool the supercritical fluid or gas mixture to induce phase separation resulting in a gas phase comprising H₂ and a liquid phase comprising CO₂;
a separator arranged in fluid communication with and downstream from the heat exchanger assembly and configured to separate the liquid phase from the gas phase;
a liquid phase return conduit configured to guide the separated liquid phase from the separator into the heat exchanger assembly as coolant for cooling the supercritical fluid or gas mixture, wherein the heat exchanger assembly comprises a heat exchanger B configured to receive the coolant from the liquid phase return conduit for cooling the supercritical fluid or gas mixture in the heat exchanger B; and
an expansion valve arranged in fluid communication between the heat exchanger B and a heat exchanger A of the heat exchanger assembly, wherein the expansion valve is configured to expand the coolant for cooling of the supercritical fluid or gas mixture in the heat exchanger A.

The expansion valve is arranged between the heat exchanger A and the heat exchanger B. The expansion valve then receives the separated liquid phase used as coolant in heat exchanger B and expands it before it is used in the heat exchanger A as coolant. Preferably, the expansion valve is configured to adiabatically expand the liquid phase as the coolant for cooling of the supercritical fluid or gas mixture in the heat exchanger A.

The heat exchanger assembly may further comprise a heat exchanger C configured to cool the supercritical fluid or gas mixture using an external coolant. It is preferred that heat exchanger C is arranged between heat exchanger B and the separator.

The heat exchangers are labelled as A, B and C merely to distinguish these from one another. This label does not imply any intrinsic technical differences. Alternatively, heat exchanger A could be termed a first heat exchanger, heat exchanger B could be termed a second heat exchanger and heat exchanger C could be termed a third heat exchanger.

It is preferred that the reactor, the heat exchanger assembly and the separator are in open fluid communication. This facilitates isobaric conditions.

The system may further comprise a pump configured to provide the fuel, optionally mixed with a catalyst, from a fuel storage tank into the reactor and establish a pressure in the reactor for reforming the fuel. The pump may also provide the process pressure in the heat exchanger assembly and the separator, especially when the reactor, the heat exchanger assembly and the separator are in open fluid communication.

The system may further comprise a combustor, preferably a catalytic combustor, configured to heat the reactor contents by combusting at least one of:
part of the separated liquid phase, in particular any residual H₂ and/or fuel in the liquid phase, receivable from the heat exchanger assembly; and
part of the separated gas phase receivable from the separator.

The combustor is preferably arranged in fluid communication with and downstream from the heat exchanger assembly to receive liquid phase therefrom.

The reactor is preferably configured to perform a reforming reaction of the fuel under at least one of the following conditions:
at a pressure of at least 7.4 MPa, preferably at least 10 MPa, more preferably at least 15 MPa, most preferably at least 20 MPa;
at a pressure of up to 200 MPa, preferably up to 100 MPa, more preferably up to 50 MPa, even more preferably up to 30 MPa; and
at a temperature of from 40 °C to 150 °C, preferably from 90 °C to 140 °C, more preferably from 110 °C to 130 °C, most preferably (120 ± 5) °C.

The heat exchanger assembly may be configured for cooling the supercritical fluid or gas mixture to a temperature of 15°C or lower, preferably 0 °C or lower, more preferably -15 °C or lower, even more preferably (-25 ± 5) °C.

The system may further comprise a hydrogen gas tank arranged in fluid communication with and downstream from the separator to receive the separated gas phase from the separator. For example, a gas phase outlet conduit may be provided between the separator and the hydrogen gas tank. The hydrogen gas tank can be arranged in open fluid communication with the separator, though it is contemplated to position a pressure regulator between the separator and the hydrogen gas tank.

The system may further comprise a hydrogen gas consuming device, such as an internal combustion engine or a fuel cell, arranged in fluid communication with and downstream from the hydrogen gas tank. The hydrogen gas consuming device may also be directly coupled to the separator to receive separated gas phase comprising H₂.

When the hydrogen gas tank as well as the combustor are present in the system, the combustor may be configured to receive separated gas phase from the hydrogen gas tank to heat the reactor contents.

The hydrogen gas production system may be configured to perform the method as disclosed herein. Similarly, the method as disclosed herein, may involve use of the system as disclosed herein.

The method involves cooling in step (c) of the supercritical fluid or gas mixture that is provided by step (b) using a first and second heat exchanger in the heat exchanger assembly and by guiding the separated liquid phase as a coolant subsequently through the second heat exchanger, expanding it for further cooling and then guiding it through the first heat exchanger.

The method and system according to the claims have the advantage that the flow of supercritical fluid or gas mixture through the heat exchanger assembly can proceed unobstructed. The cooling step is effected using two subsequent heat exchangers A and B with an expansion step of the coolant in between. This has proven to effectively reduce or even eliminate the risk of CO₂ freezing or depositing in the heat exchanger assembly (or other components in said supercritical fluid or gas mixture). When CO₂ freezes from a liquid into a solid or deposits from a gas into a solid, it can clog or close off conduits and other ducts in the system. This is a relevant risk for both the supercritical fluid or gas mixture (i.e. the fuel reforming reaction product) as well as the separated liquid phase (i.e. the coolant) fed to the heat exchanger assembly.

The method may involve providing a supercritical fluid comprising H₂ and CO₂ in step (b) of reforming the fuel and subsequently processing this supercritical fluid. Performing the fuel reforming reaction such that the supercritical fluid comprising H₂ and CO₂ is obtained, was found to provide a surprisingly efficient overall process for fuel reforming with subsequent cooling and separation while reusing the separated liquid phase for the cooling process.

The present systems and methods are further explained using the following figures, in which:
FIG. 1A and 1B show variants of a hydrogen gas production system;
FIG. 2 shows a phase diagram of CO₂ with method steps indicated;
FIG. 3 shows a pressure-temperature diagram for a composition of H₂ and CO₂; and
FIG. 4 shows isotherms for a composition of H₂ and CO₂.

The following reference numbers are used throughout the figures and the following description.
- 1: reactor
- 2: reactor inlet
- 3: fuel storage tank
- 4: reactor outlet
- 5: heat exchanger assembly
- 6: separator
- 7: lower or first separator outlet
- 8: upper or second separator outlet
- 9: liquid phase return conduit
- 10: expansion valve
- 11: heat exchanger A
- 12: heat exchanger B
- 13: heat exchanger C
- 14: hydrogen gas tank
- 15: pump
- 16: combustor
- 17: first combustor inlet
- 18: second combustor inlet
- 19: third combustor inlet
- 20: outlet valve of heat exchanger assembly
- 21: outlet valve of hydrogen gas tank
- 22: exhaust of combustor
- 23: gas phase outlet conduit
- 24: inlet of hydrogen gas tank
- 25: further outlet valve of hydrogen gas tank
- 26: hydrogen gas consuming device
- 27: liquid release valve
- 30: start point of supercritical fluid from reactor
- 31: arrow of cooling supercritical fluid
- 32: point of cooled supercritical fluid
- 33: arrow of further cooling liquid phase
- 34: point of liquid phase
- 35: arrow of expanding liquid phase
- 36: point of expanded liquid phase
- 37: arrow of heating expanded liquid phase
- 38: point of heated liquid phase
- 39: arrow of further expanding liquid phase
- 40: end point of liquid phase

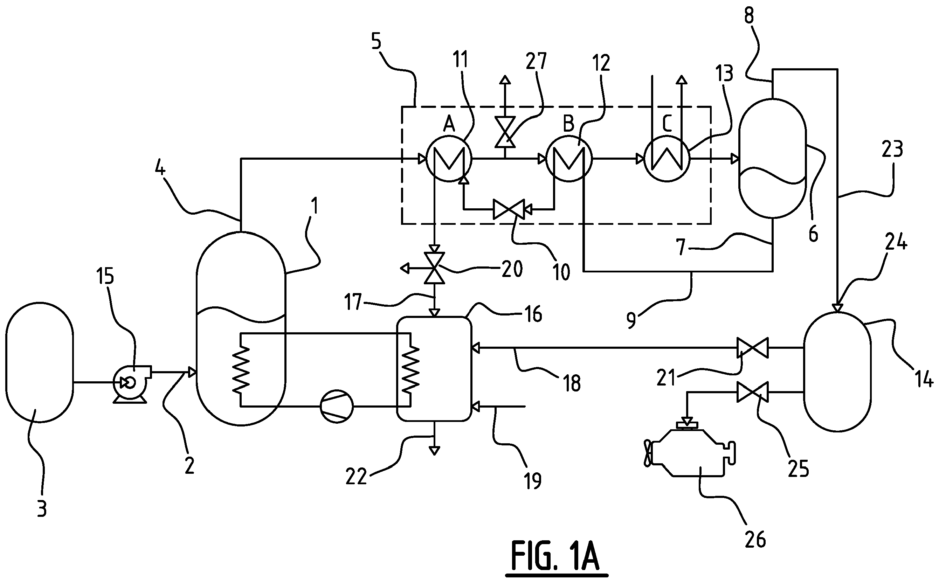

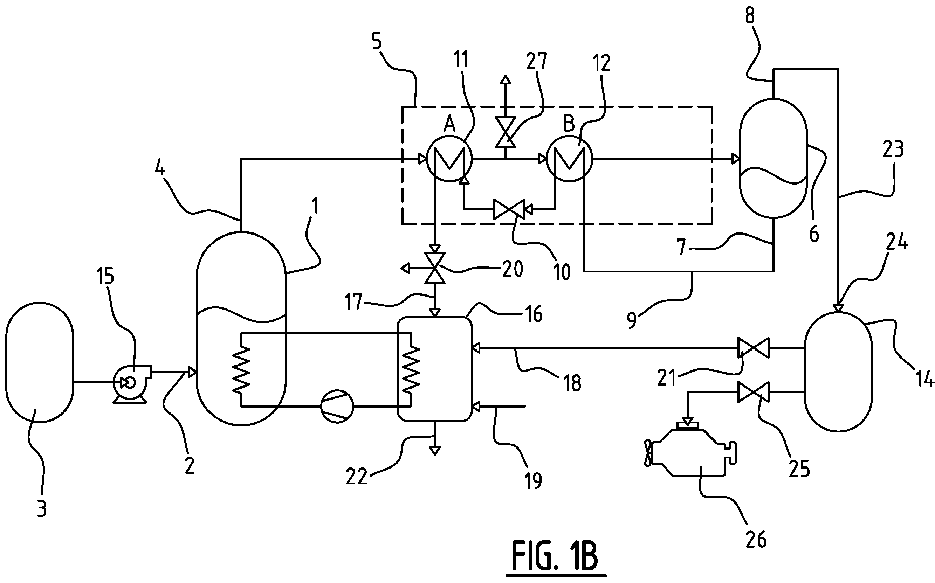

FIG. 1A and 1B each show an embodiment of a hydrogen gas production system configured to produce hydrogen gas from a fuel reformable into at least H₂ and CO₂. The system comprises a reactor 1 configured to receive the fuel and to reform the fuel into a supercritical fluid or gas mixture comprising H₂ and CO₂. The reactor 1 may have a reactor inlet 2 to receive the fuel, for example from a fuel storage tank 3. The reactor 1 may have a reactor outlet 4 to allow the supercritical fluid or gas mixture to leave the reactor 1.

The system further comprises a heat exchanger assembly 5 arranged in fluid communication with and downstream from the reactor 1. The heat exchanger assembly 5 is configured to receive the supercritical fluid or gas mixture, e.g. via the reactor outlet 4, and to cool the supercritical fluid or gas mixture to induce phase separation resulting in a gas phase comprising H₂ and a liquid phase comprising CO₂.

At the reactor outlet 4, or at least between the reactor 1 and the heat exchanger assembly 5, a back-pressure regulator may be arranged to mitigate any pressure drops downstream of the reactor 1, for example during start-up or shut-down of the system. Further, such back-pressure regulator can be used to operate the reactor 1 at a higher pressure than components arranged downstream thereof.

A separator 6 is arranged in fluid communication with and downstream from the heat exchanger assembly 5. The separator 6 is configured to separate the liquid phase from the gas phase. The liquid phase may leave the separator 6 via a lower separator outlet 7 and the gas phase may leave the separator 6 via an upper separator outlet 8. The separator 6 is here illustrated as a vessel. As liquid has a higher density than gas, the gas phase may readily escape from the separator or vessel 6 while the liquid phase, condensed from the supercritical fluid or gas mixture, can flow out in a downward direction due to gravity.

Though the separator 6 is here described as having lower and upper separator outlets 7, 8, these need not be arranged at lower and upper positions relative to one another. For example, the lower separator outlet 7 may simply be referred to as a first separator outlet 7 and the upper separator outlet 8 may be referred to as a second separator outlet 8.

A flow controller can be arranged with the lower or first separator outlet 7. This flow controller may be configured to control outflow of liquid phase from the separator 6 based on a liquid level inside the separator or vessel 6. The liquid level may be measured by a sensor configured to measure the liquid level inside the separator 6 and provide the measured level to the flow controller. The sensor can be implemented as a relative pressure sensor configured to measure a pressure difference between a bottom of the separator 6 relative to a pressure at a top of the separator 6, which indicates a height of the liquid column inside the separator 6. Other options include a floating sensor or optical sensor. The flow controller may further be configured to gradually open or close dependent on the measured liquid level inside the separator 6 compared to predefined minimum and/or maximum liquid levels. For example, the liquid level or height inside the separator 6 can be maintained between these predefined minimum and maximum liquid levels.

The system further comprises a liquid phase return conduit 9 configured to guide the separated liquid phase from the separator 6, e.g. via the lower separator outlet 8, into the heat exchanger assembly 5 as coolant for cooling the supercritical fluid or gas mixture.

The system further comprises an expansion valve 10 arranged in fluid communication between the liquid phase return conduit 9 and a heat exchanger A (or first heat exchanger, labelled with reference number 11) of the heat exchanger assembly 5. The expansion valve 10 is configured to expand, preferably by adiabatic expansion, the separated liquid phase for further cooling of the supercritical fluid or gas mixture in the heat exchanger A.

Additionally to the heat exchanger A 11, the heat exchanger assembly 5 comprises a heat exchanger B (or second heat exchanger, labelled with reference number 12). The heat exchanger B 12 is configured to receive, from the liquid phase return conduit 9, the separated liquid phase as coolant for cooling the supercritical fluid or gas mixture. For example, the heat exchanger B 12 may be in fluid communication with the lower separator outlet 7, preferably in open fluid communication.

As illustrated in FIG. 1A, the expansion valve 10 is arranged between the heat exchanger A 11 and the heat exchanger B 12. The expansion valve 10 is configured to receive the separated liquid phase used as coolant in the heat exchanger B 12 from the heat exchanger B and expand this coolant prior to introducing it into the heat exchanger A 11, the expanded separated liquid phase being thus used as coolant for the heat exchanger A 11.

Optionally, the heat exchanger assembly 5 further comprises a heat exchanger C (or third heat exchanger, labelled with reference number 13). The heat exchanger C 13 is configured to cool the supercritical fluid or gas mixture using an external coolant.

The embodiment illustrated in FIG. 1A has heat exchangers A, B and C, while FIG. 1B shows a system with only heat exchangers A and B. The heat exchanger C is optional in all embodiments.

It is preferred to use the order of heat exchangers A, B and C as is illustrated in FIG. 1A. The supercritical fluid or gas mixture from the reactor 1 is then cooled in three subsequent stages: a first stage with expanded separated liquid phase as coolant in heat exchanger A, a second stage with separated (but not yet expanded) liquid phase as coolant in heat exchanger B, and a third stage with an external coolant in heat exchanger C. The external coolant can be any known refrigerant, including water, glycol and mixtures thereof.

In the illustrated embodiments, the reactor 1 is in open fluid communication with the heat exchanger assembly 5. Moreover, the heat exchanger assembly 5 is in open fluid communication with the separator 6. This arrangement facilitates isobaric conditions for the reforming reaction of the fuel into the supercritical fluid or gas mixture and subsequent cooling and separation of the supercritical fluid or gas mixture into the gas phase and the liquid phase.

Further, the lower separator outlet 7 is in fluid communication with (an inlet of) the heat exchanger assembly 5. The upper separator outlet 8 is in fluid communication with a hydrogen gas tank 14. Mass-flow of material leaving the separator 8 through the lower separator outlet 7 and the upper separator outlet 8 can be regulated, e.g. by regulator valves. This allows modulation of a liquid level inside the separator 8 and to ensure a steady flow of separated liquid and gas phases from the separator 8.

A pressure regulator, e.g. a back-pressure regulator or one-way valve, can be arranged with the upper or second separator outlet 8. This pressure regulator allows withdrawing gas from the hydrogen tank even below a pressure level inside the separator 8.

It is highly advantageous that a single pump 15 of the system can be used to pressurize the system by pumping fuel into the reactor 1. The pump 15 is configured to provide the fuel, optionally mixed with a catalyst, from the fuel storage tank 3 into the reactor 1 and establish a pressure in the reactor 1 for reforming the fuel. A temperature in the reactor 1 can be controlled by a heater, here shown as a combustor 16, which may heat reactor contents or a reactor wall to reach desired reaction conditions in combination with the pump 15. In the illustrated examples, the pump 15 acts against the separator 6 (in particular the separator outlets 7, 8) to establish an operating pressure inside the reactor 1, the heat exchanger assembly 5 and the separator or vessel 6. The pump 15 may thus for the single pump or compressor in the system.

The system may thus further comprise the combustor 16, preferably in the form of a catalytic combustor. The combustor 16 can be configured to heat the reactor contents by combusting part of the separated liquid phase, in particular any residual H₂ in the liquid phase, which can be received from the heat exchanger assembly 5. Additionally or alternative, the combustor 16 can be configured to heat the reactor contents by combusting part of the separated gas phase (which contains H₂) receivable from the separator 6.

To this end, the combustor 16 may have first and/or second combustor inlets 17, 18 to introduce the parts of the liquid and/or gas phases, respectively, and a third combustor inlet 19 to introduce a reactant, such as oxygen, to perform combustion of the parts of the liquid and/or gas phases. The first combustor inlet 17 may be coupled to an outlet valve 20 of the heat exchanger assembly 5 and the second combustor inlet 18 may be coupled to an outlet valve 21 of the separator 6 or of the hydrogen gas tank 14. The combustor 16 may further comprise an exhaust 22 which may be coupled to an exhaust storage tank (not illustrated).

More in general, the combustor 16 is preferably arranged in fluid communication with and downstream from the heat exchanger assembly 5 to receive liquid phase from the heat exchanger assembly 5 after it has been used as coolant.

As illustrated, the combustor 16 heats contents of the reactor 1 via a heat exchanging circuit. Alternatively, the combustor 16 may be coupled directly to the reactor 1.

The system optionally also comprises the hydrogen gas tank 14. The hydrogen gas tank 14 is arranged in fluid communication with and downstream from the separator 6 to receive the separated gas phase from the separator 6. For example, a gas phase outlet conduit 23 may be provided between the separator 6 and the hydrogen gas tank 14. The gas phase outlet conduit 23 may couple the upper separator outlet 8 to an inlet 24 of the hydrogen gas tank 14. Preferably, the separator 6 is in fluid communication with the hydrogen gas tank 14 via a pressure regulator such as a back-pressure regulator. Alternatively, the separator 6 may be in open fluid communication with the hydrogen tank 14.

The hydrogen gas tank 14 may have the outlet valve 21 leading to the second combustor inlet 18 of the combustor 16. Additionally or alternatively, the hydrogen gas tank 14 may have a further outlet valve 25 for outputting hydrogen gas to a hydrogen gas consuming device 26. The system may in fact even comprise such hydrogen gas consuming device 26. In the illustrated embodiments, the hydrogen gas consuming device 26 is an internal combustion engine configured to combust hydrogen gas. However, other types of hydrogen gas consuming devices 26 are considered, such as fuel cells.

The hydrogen gas consuming device 26 can be arranged in fluid communication and downstream from the hydrogen gas tank 14 but may also be coupled to the upper separator outlet 8 of the separator 6 to receive the separated gas phase directly from the separator 6 without intervening hydrogen gas tank 14. Such an arrangement would work especially well for a continuous supply process while a hydrogen gas tank 14 enables amassing continuously produced hydrogen for batch-wise delivery.

The outlet valve 21 and/or the further outlet valve 25 of the hydrogen gas tank 14 may be pressure-release valves to open only when sufficient pressure is accumulated in the hydrogen gas tank 14. Each of the outlet valves 21, 25 may be set to a different threshold.

In the illustrated embodiments of FIG. 1A and 1B, each comprising the heat exchanger A 11, a liquid release valve 27 is arranged to optionally remove initially condensed or liquified fraction of the supercritical fluid or gas mixture from the heat exchanger arrangement 5 even before the supercritical fluid or gas mixture is fed into the separator 6. This liquid release valve 27 is illustrated downstream from the heat exchanger A 11 and may additionally or alternatively be arranged downstream from the heat exchanger B and/or the heat exchanger C. However, in all embodiments, the liquid release valve 27 is optional.

Any embodiment of the hydrogen gas production system is preferably configured to perform the method as disclosed herein.

In particular, the reactor 1 may be configured to perform a reforming reaction of the fuel under at least one of the following conditions:
at a pressure of at least 7.4 MPa, preferably at least 10 MPa, more preferably at least 15 MPa, most preferably at least 20 MPa;
at a pressure of up to 200 MPa, preferably up to 100 MPa, more preferably up to 50 MPa, even more preferably up to 30 MPa; and
at a temperature of from 40 °C to 150 °C, preferably from 90 °C to 140 °C, more preferably from 110 °C to 130 °C, most preferably (120 ± 5) °C.

In particular, the heat exchanger assembly 5 may be configured for cooling the supercritical fluid or gas mixture to a temperature of 15°C or lower, preferably 0 °C or lower, more preferably -15 °C or lower, even more preferably (-25 ± 5) °C.

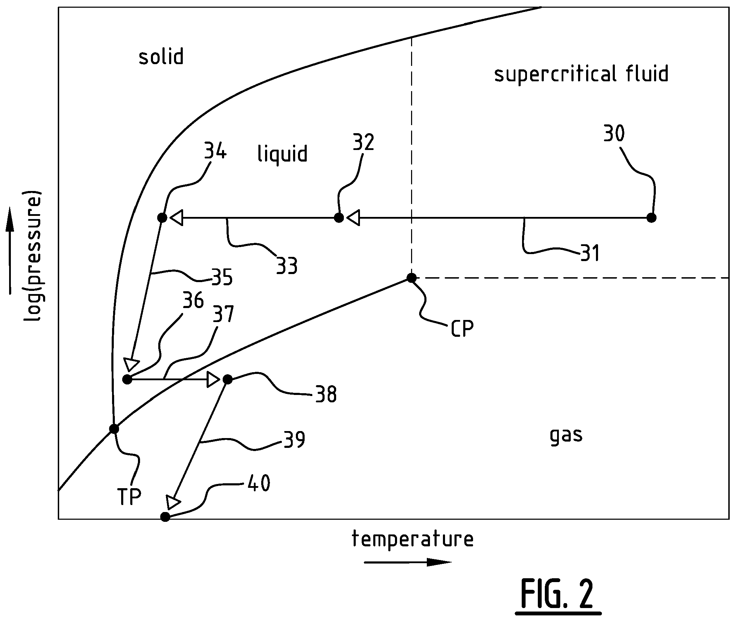

FIG. 2 - 4 illustrate aspects of a method of producing hydrogen gas from a fuel reformable into at least H₂ and CO₂.

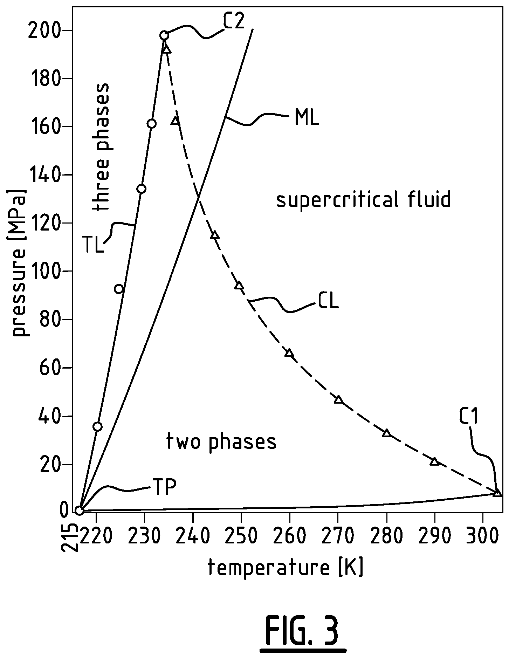

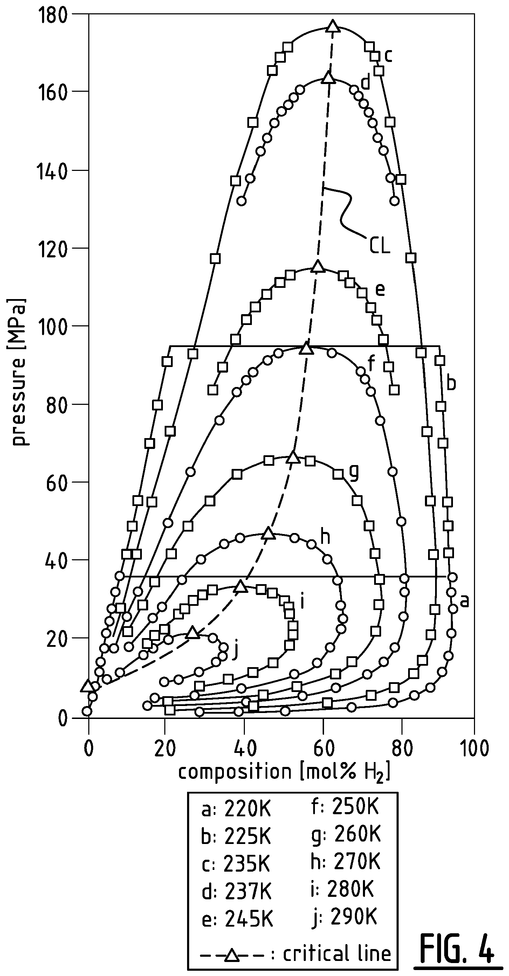

FIG. 2 is a schematic phase diagram of a substance, in particular CO₂, with some method steps indicated. The critical point CP and the triple point TP as well as the phases of matter are indicated in FIG. 2. Though the method disclosed herein is more accurately illustrated when viewing the more accurate representation of FIG. 3 and FIG. 4, the relative simplicity of FIG. 2 may help to better understand the present invention.

The method of producing hydrogen gas from a fuel reformable into at least H₂ and CO₂ comprises various steps. The fuel is provided to a reactor and there reformed into at least H₂ and CO₂ to thereby provide a supercritical fluid comprising H₂ and CO₂. The reaction conditions arise from the desired supercritical state of the fluid as a reaction product as well as the composition of the supercritical fluid. FIG. 3 and 4 indicate what pressure and temperature are desirable, depending on the composition of the supercritical fluid. Though FIG. 3 and 4 relate to a relatively pure composition of H₂ and CO₂, similar data can be gathered for more complex mixtures by standard experiments.

The condition of the supercritical fluid is schematically indicated by point 30 in the phase diagram of FIG. 2. Next, the supercritical fluid is cooled in the heat exchanger assembly 5 to induce phase separation resulting in the gas phase (primarily) comprising H₂ and the liquid phase (primarily) comprising CO₂.

This part of the process is schematically indicated by arrow 31 from point 30 to point 32, when at least pure carbon dioxide is brought from the supercritical state to the liquid state. Cooling may be continued (arrow 33) to point 34, for example in subsequent heat exchangers (in particular by means of the heat exchangers A and B and optionally also C). The cooling of arrows 31 and 33 may be isobaric. The liquid phase may now be close to pure carbon dioxide, FIG. 2 thus more accurately reflecting the actual method.

Next, an expansion (arrow 35) of the liquid phase leads to point 36 in the phase diagram of FIG. 2. The expanded liquid phase is used to cool the supercritical fluid in the heat exchanger assembly 5, in particular in the heat exchanger A, thus leading to a heating (arrow 37) of the expanded liquid phase to point 38. At the same time, supercritical fluid is cooled as indicated in arrows 31 and/or 33 (heat being transferred from the supercritical fluid to the separated liquid phase). Expansion of the liquid phase, into a less dens liquid or even into a gas, increases its cooling capacity.

A final expansion (arrow 39) may lead to an ambient pressure and temperature at point 40, e.g. when the expanded liquid phase leaves the heat exchanger arrangement 5. By passing this liquid phase from the heat exchanger arrangement 5 over the combustor 16, any H₂ that was still dissolved in the liquid phase upon separation, may be combusted to provide heat for the reactor 1.

FIG. 3 shows a pressure-temperature diagram for a composition of H₂ and CO₂. The triple point TP of pure CO₂ is indicated at the left-bottom corner of the diagram. From there, the line TL ('triple line') indicates the three-phase region of solid-liquid-gas phases. The line ML ('melting line') indicates the CO₂ melting curve.

The triple line TL extends to the upper critical end point C2 of the critical line CL of the H₂ / CO₂ mixture. The critical line CL follows a curved path in the diagram to a lower pressure and an increasing temperature down to point C1, which corresponds to the critical point CP of pure CO₂ also observed in the schematic diagram of FIG. 2. To the right of the critical line CL, the H₂ / CO₂ mixture is in the supercritical fluid phase. Between the critical line CL and the triple line TL, separation into two phases occurs: a gas phase comprising H₂ and a liquid phase comprising CO₂. This phase separation is employed in the method of the present invention.

The composition of the H₂ / CO₂ mixture on the critical line CL varies at each data point from about 27 mol% H₂ at the data point nearest the CO₂ critical point C1 = CP, to about 64 mol% H₂ at the data point nearest the upper critical end point C2. The eight data points are also provided in the table below.

| **H₂ / CO₂ mixture critical line data points** | | |
|---|---|---|
| Temperature [K] | Pressure [MPa] | Composition [mol% H₂] |
| 235 | 191.8 | 64.0 |
| 237 | 162.2 | 62.7 |
| 245 | 114.6 | 59.4 |
| 250 | 94.3 | 56.3 |
| 260 | 66.1 | 52.8 |
| 270 | 46.5 | 46.5 |
| 280 | 32.8 | 38.9 |
| 290 | 20.9 | 26.8 |

FIG. 4 shows isotherms for H₂ / CO₂ mixtures and their separation into two phases depending on pressure. A phase on the left-hand side of the diagram primarily contains CO2 in a liquid state, while another phase on the right-hand side of the diagram primarily contains H2 in a gas state. The critical line CL is again indicated where the two phases blend into a one to form a supercritical fluid.

For example, starting with a 1:1 H₂ / CO₂ mixtures (i.e. 50 mol% H₂ and the remainder CO₂) at a temperature of 290 K (isobar j of FIG. 4) and a pressure of 40 MPa, the mixture will be in supercritical state. Such a mixture can be produced in the system as disclosed herein, for example by reforming formic acid. A higher temperature and pressure are favorable for this reaction. Moreover, the reaction product will more readily be obtained in the form of a supercritical fluid mixture.

This supercritical fluid mixture H₂ and CO₂ is then cooled down to a temperature of, say, 250 K (isobar f of FIG. 4). As can be seen from FIG. 3 and 4, a 1:1 H₂ / CO₂ mixture at 40 MPa will remain in a supercritical state down to a temperature of roughly 275 K. When cooling further, phase separation occurs along the two branches of the isotherms to the left and right of the critical line CL shown in FIG. 4. Still at 40 MPa, but now having reached a temperature of 250 K, two phases arise: a liquid phase of roughly 16 mol% H₂ dissolved in liquid CO₂ and a gas phase of roughly 81 mol% H₂ with the remainder gaseous CO₂.

When temperature is selected even lower, the liquid phase will be even more enriched in CO₂ and the gas phase will be even more enriched in H₂, see e.g. isotherms b and a in FIG. 4. Note however, that isotherms a and b do not exhibit a supercritical phase, as these fall beyond the critical line CL, which can also be understood from the data presented in FIG. 3.

The method has been explained in relation to FIG. 2 - 4 when starting from reforming reaction products as a supercritical fluid (which is preferred). However, a gas mixture is also considered. Similar reasoning applies, though point 30 of FIG. 2 would be located at lower pressure in the gasphase portion of the diagram with points 32 and 34 located at the same pressure as that of point 30. The case of a gas mixture can also be visualised in FIG. 3: the gas mixture exists in the region below the curve from the triple point TP to the lower critical end point C1 (corresponding to the critical point CP of pure CO₂).

Data such as presented in FIG. 3 and 4 enable adequate selection of pressure and temperature conditions for particular H₂ / CO₂ mixing ratios. Further, similar phase diagrams can be obtained from literature or by experiment to apply the present method more generally to fuel reformable into at least H₂ and CO₂.

In summary, the present method and system enable continuous production of hydrogen gas from a fuel reformable into at least H₂ and CO₂ in which H₂ and CO₂ are separated into two phases, each of which can be advantageously reused within the continuous process for energy efficient production while at the same time separated H₂ and CO₂ gas streams are provided of purity which can be selected or optimized.

## Claims

1. A method of producing hydrogen gas from a fuel reformable into at least H₂ and CO₂, the method comprising:
(a) providing the fuel in a reactor;
(b) reforming the fuel in the reactor into at least H₂ and CO₂ to thereby provide a supercritical fluid or gas mixture comprising H₂ and CO₂;
(c) cooling the supercritical fluid or gas mixture in a heat exchanger assembly to induce phase separation resulting in a gas phase comprising H₂ and a liquid phase comprising CO₂, wherein the supercritical fluid or gas mixture is initially cooled in a heat exchanger A of the heat exchanger assembly and further cooled in a heat exchanger B of the heat exchanger assembly;
(d) separating the liquid phase from the gas phase;
(e) guiding the separated liquid phase obtained in step (d) as coolant into the heat exchanger assembly to cool the supercritical fluid or gas mixture in step (c), wherein the coolant is guided through the heat exchanger B and heat exchanger A in this order; and
(f) between the guiding of the separated liquid phase through the heat exchanger B and the heat exchanger A in step (e), expanding the coolant resulting in further cooling thereof and using the expanded coolant to cool the supercritical fluid or gas mixture in the heat exchanger A in step (c).

2. The method according to claim 1, wherein the method is performed in a continuous way.

3. The method according to claim 1 or 2, wherein step (c) is performed in the heat exchanger assembly arranged downstream from the reactor.

4. The method according to any of the previous claims, wherein step (d) is performed in a separator arranged downstream from the heat exchanger assembly.

5. The method according to any of the previous claims, wherein:
step (a) comprises pressurizing the fuel from a fuel storage tank into the reactor to thereby establish a pressure in the reactor for reforming the fuel in step (b); and
at least steps (b) and (c) are performed under isobaric conditions.

6. The method according to claim 5, wherein step (d) and/or step (e) is also performed under said isobaric conditions.

7. The method according to any of the previous claims, wherein step (b) is performed in the presence of a catalyst.

8. The method according to any of the previous claims, wherein the fuel is or comprises an organic hydrogen carrier, preferably a liquid organic hydrogen carrier. more preferably formic acid.

9. The method according to any of the previous claims, further comprising:
(g) guiding the separated gas phase obtained in step (d) into a hydrogen gas tank, preferably further comprising fuelling a hydrogen gas consuming device, such as an internal combustion engine or a fuel cell, with hydrogen gas from the hydrogen gas tank.

10. The method according to any of the previous claims, wherein the reactor contents are heated in step (b) using heat obtained by combusting:
a combustible part of the separated liquid phase, in particular residual H₂ and/or fuel present in the liquid phase, preferably after said liquid phase has been guided through the heat exchanger assembly; and
optionally, part of the separated gas phase obtained in step (d) which is preferably guided from the hydrogen gas tank of the previous claim to a combustor to heat the reactor contents.

11. A hydrogen gas production system configured to produce hydrogen gas from a fuel reformable into at least H₂ and CO₂, the system comprising:
a reactor configured to receive the fuel and to reform the fuel into a supercritical fluid or gas mixture comprising H₂ and CO₂;
a heat exchanger assembly arranged in fluid communication with and downstream from the reactor and configured to receive the supercritical fluid or gas mixture and to cool the supercritical fluid or gas mixture to induce phase separation resulting in a gas phase comprising H₂ and a liquid phase comprising CO₂;
a separator arranged in fluid communication with and downstream from the heat exchanger assembly and configured to separate the liquid phase from the gas phase;
a liquid phase return conduit configured to guide the separated liquid phase from the separator into the heat exchanger assembly as coolant for cooling the supercritical fluid or gas mixture, wherein the heat exchanger assembly comprises a heat exchanger B configured to receive the coolant from the liquid phase return conduit for cooling the supercritical fluid or gas mixture in the heat exchanger B; and
an expansion valve arranged in fluid communication between the heat exchanger B and a heat exchanger A of the heat exchanger assembly, wherein the expansion valve is configured to expand, preferably adiabatically expand, the coolant for cooling of the supercritical fluid or gas mixture in the heat exchanger A,
wherein the system is preferably configured to perform the method according to any of the previous claims.

12. The hydrogen gas production system according to claim 11, wherein the heat exchanger assembly further comprises a heat exchanger C configured to cool the supercritical fluid or gas mixture using an external coolant, wherein the heat exchanger C is preferably arranged between the heat exchanger B and the separator.

13. The hydrogen gas production system according to claim 11 or 12, further comprising a pump configured to provide the fuel, optionally mixed with a catalyst, from a fuel storage tank into the reactor and establish a pressure in the reactor for reforming the fuel and wherein the reactor, the heat exchanger assembly and the separator are in open fluid communication.

14. The hydrogen gas production system according to any of the claims 11 - 13, further comprising a hydrogen gas tank arranged in fluid communication, preferably open fluid communication, with and downstream from the separator to receive the separated gas phase from the separator, optionally further comprising a hydrogen gas consuming device, such as an internal combustion engine or a fuel cell, arranged in fluid communication with and downstream from the hydrogen gas tank.

15. The hydrogen gas production system according to any of the claims 11 - 14, further comprising a combustor, preferably a catalytic combustor, configured to heat the reactor contents by combusting:
part of the separated liquid phase, in particular any residual H₂ and/or residual fuel present in the liquid phase, receivable from the heat exchanger assembly, wherein the combustor is arranged in fluid communication with and downstream from the heat exchanger assembly to receive liquid phase therefrom; and
optionally, part of the separated gas phase receivable from the separator, in particular from the hydrogen gas tank of the previous claim.

## Patentansprüche

1. Verfahren zum Erzeugen von Wasserstoffgas aus einem Kraftstoff, der mindestens zu H₂ und CO₂ reformierbar ist, das Verfahren umfassend:
(a) Bereitstellen des Kraftstoffs in einem Reaktor;
(b) Reformieren des Kraftstoffs in dem Reaktor zu mindestens H₂ und CO₂, um dadurch ein superkritisches Fluid oder Gasgemisch bereitzustellen, umfassend H₂ und CO₂;
(c) Kühlen des superkritischen Fluids oder Gasgemischs in einer Wärmetauscherbaugruppe, um eine Phasenabscheidung einzuleiten, die zu einer Gasphase umfassend H₂ und einer Flüssigphase umfassend CO₂ führt, wobei das superkritische Fluid oder Gasgemisch anfangs in einem Wärmetauscher A der Wärmetauscherbaugruppe gekühlt und ferner in einem Wärmetauscher B der Wärmetauscherbaugruppe gekühlt wird;
(d) Abscheiden der Flüssigphase von der Gasphase;
(e) Leiten der in Schritt (d) erhaltenen abgeschiedenen Flüssigphase als Kühlmittel in die Wärmetauscherbaugruppe, um das superkritische Fluid oder Gasgemisch in Schritt (c) zu kühlen, wobei das Kühlmittel durch den Wärmetauscher B und den Wärmetauscher A in dieser Reihenfolge geleitet wird; und
(f) zwischen dem Leiten der abgeschiedenen Flüssigphase durch den Wärmetauscher B und den Wärmetauscher A in Schritt (e), Expandieren des Kühlmittels, was zu einem weiteren Kühlen desselben führt, und Verwenden des expandierten Kühlmittels, um das superkritische Fluids oder das Gasgemisch in dem Wärmetauscher A in Schritt (c) zu kühlen.

2. Verfahren nach Anspruch 1, wobei das Verfahren auf eine kontinuierliche Weise durchgeführt wird.

3. Verfahren nach Anspruch 1 oder 2, wobei Schritt (c) in der Wärmetauscherbaugruppe durchgeführt wird, die stromabwärts von dem Reaktor angeordnet ist.

4. Verfahren nach einem der vorstehenden Ansprüche, wobei Schritt (d) in einem Abscheider durchgeführt wird, der stromabwärts von der Wärmetauscherbaugruppe angeordnet ist.

5. Verfahren nach einem der vorstehenden Ansprüche, wobei:
Schritt (a) das Beaufschlagen, mit Druck, des Kraftstoffs aus einem Kraftstoffspeichertank in den Reaktor umfasst, um dadurch einen Druck in dem Reaktor zum Reformieren des Kraftstoffs in Schritt (b) zu aufzubauen; und
mindestens die Schritte (b) und (c) unter isobaren Bedingungen durchgeführt werden.

6. Verfahren nach Anspruch 5, wobei Schritt (d) und/oder Schritt (e) ebenfalls unter den isobaren Bedingungen durchgeführt werden.

7. Verfahren nach einem der vorstehenden Ansprüche, wobei Schritt (b) in Gegenwart eines Katalysators durchgeführt wird.

8. Verfahren nach einem der vorstehenden Ansprüche, wobei der Kraftstoff ein organischer Wasserstoffträger ist oder einen organischen Wasserstoffträger umfasst, bevorzugt einen flüssigen organischen Wasserstoffträger, mehr bevorzugt Ameisensäure.

9. Verfahren nach einem der vorstehenden Ansprüche, ferner umfassend:
(g) Leiten der in Schritt (d) erhaltenen abgeschiedenen Gasphase in einen Wasserstoffgastank, bevorzugt ferner umfassend Betanken einer wasserstoffgasverbrauchenden Vorrichtung, wie eines Verbrennungsmotors oder einer Kraftstoffzelle, mit Wasserstoffgas aus dem Wasserstoffgastank.

10. Verfahren nach einem der vorstehenden Ansprüche, wobei der Reaktorinhalt in Schritt (b) unter Verwendung von Wärme erwärmt wird, die durch Verbrennen von Folgendem erhalten wird:
einem brennbaren Teil der abgeschiedenen Flüssigphase, insbesondere von in der Flüssigphase vorhandenem restlichem H₂ und/oder Kraftstoff, bevorzugt nachdem die Flüssigphase durch die Wärmetauscherbaugruppe geleitet wurde; und
gegebenenfalls einem Teil der in Schritt (d) erhaltenen abgeschiedenen Gasphase, der bevorzugt aus dem Wasserstoffgastank des vorstehenden Anspruchs zu einem Brenner geleitet wird, um den Reaktorinhalt zu erwärmen.

11. Wasserstoffgaserzeugungssystem, das konfiguriert ist, um Wasserstoffgas aus einem Kraftstoff zu erzeugen, der mindestens zu H₂ und CO₂ reformierbar ist, das System umfassend:
einen Reaktor, der konfiguriert ist, um den Kraftstoff zu empfangen und den Kraftstoff zu einem superkritischen Fluid oder Gasgemisch zu reformieren, umfassend H₂ und CO₂;
eine Wärmetauscherbaugruppe, die in Fluidkommunikation mit und stromabwärts von dem Reaktor angeordnet ist und konfiguriert ist, um das superkritische Fluid oder Gasgemisch zu empfangen und das superkritische Fluid oder Gasgemisch zu kühlen, um eine Phasenabscheidung einzuleiten, die zu einer Gasphase, die H₂ umfasst, und einer Flüssigphase, die CO₂ umfasst, führt;
einen Abscheider, der in Fluidkommunikation mit und stromabwärts von der Wärmetauscherbaugruppe angeordnet und konfiguriert ist, um die Flüssigphase von der Gasphase abzuscheiden;
eine Flüssigphasenrückführleitung, die konfiguriert ist, um die abgeschiedene Flüssigphase als Kühlmittel zum Kühlen des superkritischen Fluids oder Gasgemischs von dem Abscheider in die Wärmetauscherbaugruppe zu leiten, wobei die Wärmetauscherbaugruppe einen Wärmetauscher B umfasst, der konfiguriert ist, um das Kühlmittel von der Flüssigphasenrückführleitung zum Kühlen des superkritischen Fluids oder Gasgemischs in dem Wärmetauscher B zu empfangen; und
ein Expansionsventil, das in Fluidkommunikation zwischen dem Wärmetauscher B und einem Wärmetauscher A der Wärmetauscherbaugruppe angeordnet ist, wobei das Expansionsventil konfiguriert ist, um das Kühlmittel zum Kühlen des superkritischen Fluids oder Gasgemischs in dem Wärmetauscher A zu expandieren, bevorzugt adiabatisch zu expandieren,
wobei das System bevorzugt konfiguriert ist, um das Verfahren nach einem der vorstehenden Ansprüche durchzuführen.

12. Wasserstoffgaserzeugungssystem nach Anspruch 11, wobei die Wärmetauscherbaugruppe ferner einen Wärmetauscher C umfasst, der konfiguriert ist, um das superkritische Fluid oder Gasgemisch unter Verwendung eines externen Kühlmittels zu kühlen, wobei der Wärmetauscher C bevorzugt zwischen dem Wärmetauscher B und dem Abscheider angeordnet ist.

13. Wasserstoffgaserzeugungssystem nach Anspruch 11 oder 12, ferner umfassend eine Pumpe, die konfiguriert ist, um den Kraftstoff, gegebenenfalls gemischt mit einem Katalysator, aus einem Kraftstoffspeichertank in den Reaktor bereitzustellen und einen Druck in dem Reaktor zum Reformieren des Kraftstoffs aufzubauen, und wobei der Reaktor, die Wärmetauscherbaugruppe und der Abscheider in offener Fluidkommunikation stehen.

14. Wasserstoffgaserzeugungssystem nach einem der Ansprüche 11 bis 13, ferner umfassend einen Wasserstoffgastank, der in Fluidkommunikation, bevorzugt offener Fluidkommunikation, mit und stromabwärts von dem Abscheider angeordnet ist, um die abgeschiedene Gasphase von dem Abscheider zu empfangen, gegebenenfalls ferner umfassend eine wasserstoffgasverbrauchende Vorrichtung, wie einen Verbrennungsmotor oder eine Kraftstoffzelle, die in Fluidkommunikation mit und stromabwärts von dem Wasserstoffgastank angeordnet ist.

15. Wasserstoffgaserzeugungssystem nach einem der Ansprüche 11 bis 14, ferner umfassend einen Brenner, bevorzugt einen katalytischen Brenner, der konfiguriert ist, um den Reaktorinhalt durch Verbrennen von Folgendem zu erwärmen:
einem Teil der abgeschiedenen Flüssigphase, insbesondere von in der Flüssigphase vorhandenem restlichem H₂ und/oder restlichem Kraftstoff, die von der Wärmetauscherbaugruppe empfangen werden können, wobei der Brenner in Fluidkommunikation mit und stromabwärts von der Wärmetauscherbaugruppe angeordnet ist, um eine Flüssigphase davon zu empfangen; und
gegebenenfalls einem Teil der abgeschiedenen Gasphase, die von dem Abscheider empfangen werden kann, insbesondere aus dem Wasserstoffgastank des vorstehenden Anspruchs.

## Revendications

1. Procédé de production d'hydrogène gazeux à partir d'un combustible reformable en au moins H₂ et CO₂, le procédé comprenant :
a) la fourniture du combustible dans un réacteur ;
b) le reformage du combustible du réacteur en au moins H₂ et CO₂ pour fournir ainsi un fluide supercritique ou un mélange gazeux comprenant H₂ et CO₂ ;
(c) le refroidissement du fluide supercritique ou du mélange gazeux dans un ensemble échangeur de chaleur pour induire une séparation de phase résultant en une phase gazeuse comprenant H₂ et une phase liquide comprenant du CO₂, dans lequel le fluide supercritique ou le mélange gazeux est initialement refroidi dans un échangeur de chaleur A de l'ensemble échangeur de chaleur et refroidi en outre dans un échangeur de chaleur B de l'ensemble échangeur de chaleur ;
d) la séparation de la phase liquide de la phase gazeuse ;
(e) le guidage de la phase liquide séparée obtenue à l'étape (d) en tant que liquide de refroidissement dans l'ensemble échangeur de chaleur pour refroidir le fluide supercritique ou le mélange gazeux à l'étape (c), dans lequel le liquide de refroidissement est guidé à travers l'échangeur de chaleur B et l'échangeur de chaleur A dans cet ordre ; et
(f) entre le guidage de la phase liquide séparée à travers l'échangeur de chaleur B et l'échangeur de chaleur A à l'étape (e), la dilatation du liquide de refroidissement résultant en un refroidissement supplémentaire de celui-ci et l'utilisation du liquide de refroidissement dilaté pour refroidir le fluide supercritique ou le mélange gazeux dans l'échangeur de chaleur A à l'étape (c).

2. Procédé selon la revendication 1, dans lequel le procédé est réalisé de manière continue.

3. Procédé selon la revendication 1 ou 2, dans lequel l'étape (c) est réalisée dans l'ensemble échangeur de chaleur agencé en aval du réacteur.

4. Procédé selon l'une quelconque des revendications précédentes, dans lequel l'étape (d) est réalisée dans un séparateur agencé en aval de l'ensemble échangeur de chaleur.

5. Procédé selon l'une quelconque des revendications précédentes, dans lequel :
l'étape (a) comprend la pressurisation du combustible depuis un réservoir de stockage de combustible dans le réacteur pour ainsi établir une pression dans le réacteur pour reformer le combustible à l'étape (b) ; et
au moins les étapes (b) et (c) sont réalisées dans des conditions isobares.

6. Procédé selon la revendication 5, dans lequel l'étape (d) et/ou l'étape (e) sont également réalisées dans lesdites conditions isobares.

7. Procédé selon l'une quelconque des revendications précédentes, dans lequel l'étape (b) est réalisée en présence d'un catalyseur.

8. Procédé selon l'une quelconque des revendications précédentes, dans lequel le combustible est ou comprend un véhicule d'hydrogène organique, de préférence un véhicule d'hydrogène organique liquide, plus préférablement d'acide formique.

9. Procédé selon l'une quelconque des revendications précédentes, comprenant en outre :
(g) le guidage de la phase gazeuse séparée obtenue à l'étape (d) dans un réservoir d'hydrogène gazeux, comprenant de préférence en outre l'alimentation en combustible d'un dispositif consommateur d'hydrogène gazeux, tel qu'un moteur à combustion interne ou une pile à combustible, avec de l'hydrogène gazeux provenant du réservoir d'hydrogène gazeux.

10. Procédé selon l'une quelconque des revendications précédentes, dans lequel les contenus de réacteur sont chauffés à l'étape (b) à l'aide de la chaleur obtenue par combustion :
une partie combustible de la phase liquide séparée, en particulier le H₂ résiduel et/ou le carburant présent dans la phase liquide, de préférence après que ladite phase liquide a été guidée à travers l'ensemble échangeur de chaleur ; et
facultativement, une partie de la phase gazeuse séparée obtenue à l'étape (d) qui est de préférence guidée à partir du réservoir d'hydrogène gazeux selon la revendication précédente vers une chambre de combustion pour chauffer les contenus de réacteur.

11. Système de production d'hydrogène gazeux configuré pour produire de l'hydrogène gazeux à partir d'un combustible pouvant être reformé en au moins H₂ et CO₂, le système comprenant :
un réacteur configuré pour recevoir le combustible et pour reformer le combustible en un fluide supercritique ou un mélange gazeux comprenant du H₂ et du CO₂ ;
un ensemble échangeur de chaleur agencé en communication fluidique avec le réacteur et en aval de celui-ci et conçu pour recevoir le fluide supercritique ou le mélange gazeux et pour refroidir le fluide supercritique ou le mélange gazeux afin d'induire une séparation de phase résultant en une phase gazeuse comprenant H₂ et une phase liquide comprenant CO₂ ;
un séparateur agencé en communication fluidique avec l'ensemble échangeur de chaleur et en aval de celui-ci et conçu pour séparer la phase liquide de la phase gazeuse ;
un conduit de retour de phase liquide conçu pour guider la phase liquide séparée du séparateur dans l'ensemble échangeur de chaleur comme liquide de refroidissement pour le refroidissement du fluide supercritique ou du mélange gazeux, dans lequel l'ensemble échangeur de chaleur comprend un échangeur de chaleur B conçu pour recevoir le liquide de refroidissement provenant du conduit de retour de phase liquide pour le refroidissement du fluide supercritique ou du mélange gazeux dans l'échangeur de chaleur B ; et
un détendeur agencé en communication fluidique entre l'échangeur de chaleur B et un échangeur de chaleur A de l'ensemble échangeur de chaleur, dans lequel le détendeur est conçu pour dilater, de préférence dilater de manière adiabatique, le liquide de refroidissement pour le refroidissement du fluide supercritique ou du mélange gazeux dans l'échangeur de chaleur A,
dans lequel le système est de préférence configuré pour réaliser le procédé selon l'une quelconque des revendications précédentes.

12. Système de production d'hydrogène gazeux selon la revendication 11, dans lequel l'ensemble échangeur de chaleur comprend en outre un échangeur de chaleur C conçu pour refroidir le fluide supercritique ou le mélange gazeux à l'aide d'un liquide de refroidissement externe, dans lequel l'échangeur de chaleur C est de préférence agencé entre l'échangeur de chaleur B et le séparateur.

13. Système de production d'hydrogène gazeux selon la revendication 11 ou 12, comprenant en outre une pompe conçue pour fournir le combustible, facultativement mélangé à un catalyseur, à partir d'un réservoir de stockage de combustible dans le réacteur et établir une pression dans le réacteur pour reformer le combustible, et dans lequel le réacteur, l'ensemble échangeur de chaleur et le séparateur sont en communication fluidique ouverte.

14. Système de production d'hydrogène gazeux selon l'une quelconque des revendications 11 à 13, comprenant en outre un réservoir d'hydrogène gazeux agencé en communication fluidique, de préférence une communication fluidique ouverte, avec et en aval à partir du séparateur pour recevoir la phase gazeuse séparée du séparateur, comprenant facultativement en outre un dispositif consommateur d'hydrogène gazeux, tel qu'un moteur à combustion interne ou une pile à combustible, agencé en communication fluidique avec le réservoir d'hydrogène gazeux et en aval de celui-ci.

15. Système de production d'hydrogène gazeux selon l'une quelconque des revendications 11 à 14, comprenant en outre une chambre de combustion, de préférence une chambre de combustion catalytique, conçue pour chauffer les contenus de réacteur par combustion :
une partie de la phase liquide séparée, en particulier tout H₂ résiduel et/ou tout combustible résiduel présent dans la phase liquide, pouvant être reçu de l'ensemble échangeur de chaleur, dans lequel la chambre de combustion est agencée en communication fluidique avec l'ensemble échangeur de chaleur et en aval de celui-ci pour recevoir la phase liquide à partir de celui-ci ; et
facultativement, une partie de la phase gazeuse séparée pouvant être reçue du séparateur, en particulier du réservoir d'hydrogène gazeux selon la revendication précédente.
